(19) **Europäisches Patentamt / European Patent Office / Office européen des brevets**

(11) **EP 1 341 686 B1**

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(21) Anmeldenummer: **01270441.7**

(22) Anmeldetag: **09.11.2001**

(51) Int Cl.:
**B60T 8/32** *(2006.01)*  **B60T 7/12** *(2006.01)*
**B60T 13/66** *(2006.01)*

(86) Internationale Anmeldenummer:
**PCT/EP2001/012961**

(87) Internationale Veröffentlichungsnummer:
**WO 2002/047946 (20.06.2002 Gazette 2002/25)**

(54) **VERFAHREN UND VORRICHTUNG ZUR STEUERUNG DER BREMSANLAGE EINES FAHRZEUGS**

METHOD AND DEVICE FOR CONTROLLING THE BRAKE SYSTEM OF A VEHICLE

PROCEDE ET DISPOSITIF POUR LA COMMANDE DU SYSTEME DE FREINAGE D'UN VEHICULE

(84) Benannte Vertragsstaaten:
**DE FR GB**

(30) Priorität: **16.12.2000 DE 10062978**

(43) Veröffentlichungstag der Anmeldung:
**10.09.2003 Patentblatt 2003/37**

(73) Patentinhaber: **Bayerische Motoren Werke Aktiengesellschaft**
**80809 München (DE)**

(72) Erfinder: **TÖLGE, Thomas**
**80993 München (DE)**

(56) Entgegenhaltungen:
**EP-A- 0 867 350      EP-A- 0 895 910**
**EP-A- 0 980 803      DE-A- 19 520 609**
**DE-A- 19 524 939     DE-A- 19 739 152**

**Beschreibung**

Die Erfindung betrifft ein Verfahren und eine Vorrichtung zur Steuerung der Bremsanlage eines Fahrzeugs gemäß den Oberbegriffen der unabhängigen Patentansprüche.

In der DE-A-195 24 939 wird ein Verfahren und eine Vorrichtung zur Steuerung der Bremsanlage eines Fahrzeugs vorgeschlagen, bei welchem bei Überschreiten eines Schwellwertes durch die Vordruckänderungsrate ein automatischer Bremsvorgang eingeleitet wird, wobei der Schwellwert mit zunehmendem Gefahrenpotential kleiner wird.

Die DE-A-197 12 859 beschreibt eine Bremsregelungsanlage für Kraftfahrzeuge. Bei dieser Bremsregelungsanlage ist ein Drucksensor zur Erfassung des Vorsteuerdruckes und des Vorsteuerdruck-Gradienten vorgesehen. Wenn der Vorsteuerdruck eine erste Schwelle und der Vorsteuerdruck-Gradient eine zweite Schwelle überschritten haben, schaltet ein Steuergerät auf einen Hilfsbetrieb um. In diesem Hilfsbetrieb wird ein schneller Druckaufbau in den Radbremszylindern und damit die maximal mögliche Verzögerung und ein kleinstmöglicher Anhalteweg erreicht.

Eine vergleich bare lehre findet sich in der DE-A-195 20 609.

Bei den genannten Verfahren erfolgt abhängig vom Überschreiten bestimmter Schwellwerte eine Bremsunterstützung. Dies bedeutet, daß eine klare Grenze für das Einleiten der Bremsunterstützung vorgesehen ist. Unterhalb dieser Grenze wird keine Bremsunterstützung geleistet, oberhalb dieser Grenze erfolgt eine volle Bremsunterstützung in Notbremssituationen. Der Übergang von der normalen Bremsphase in die Unterstützungsphase erfolgt hierbei schlagartig. Es ist hierbei schwierig, eine geeignete Grenze einzustellen bzw. festzulegen. Ein zu niedrig angesetzter Schwellwert führt dazu, daß auch in unkritischen Situationen eine vom Fahrer nicht gewünschte Notbremsung erfolgen kann. Ein zu hoch angesetzter Schwellwert wiederum ist dann wirkungslos, wenn beispielsweise ungeübte Fahrer in kritischen Situationen (bzw. scheinbar unkritischen Situationen) zu zaghaft bremsen und dadurch den Schwellwert nicht erreichen und eine Notbremsung zu spät oder gar nicht eingeleitet wird.

Demgegenüber liegt der Erfindung die Aufgabe zugrunde, ein verbessertes Verfahren und eine verbesserte Vorrichtung zur Steuerung der Bremsanlage eines Fahrzeugs bereit zu stellen. Diese Aufgabe wird durch die Merkmale der unabhängigen Ansprüche 1,7 und 9 gelöst.

Die Erfindung geht von dem Grundgedanken aus, eine Bereitschaftsphase für die Bremsunterstützung vorzusehen. Diese Bereitschaftsphase wird eingeleitet, sobald der Vorsteuerdruck einen Schwellwert S1 und die Vorsteuerdruck-Änderungsrate einen dritten Schwellwert SB überschreitet. Der dritte Schwellwert SB ist kleiner als ein zweiter Schwellwert S2, bei dessen Überschreiten der Bremsvorgang unmittelbar in eine Vollbremsunterstützung übergeleitet wird. Durch diese Überschreitung des dritten Schwellwertes SB bzw. durch diese Eintritt in die Bereitschaftsphase wird die Bremsunterstützung aktiviert bzw. geht in Bereitschaft, es erfolgt jedoch noch keine Auslösung einer Vollbremsunterstützung. Während der Bereitschaftsphase wird das Bremsverhalten des Fahrers weiter überwacht. Wenn der Fahrer im weiteren Verlauf der Bremsung den Druck auf das Bremspedal, d.h. den Vorsteuerdruck zunächst hält oder ihn sogar etwas steigert (d.h. Vorsteuerdruck-Änderungsrate etwa 0 oder positiv), dann erst wird nach Überschreiten eines vierten Schwellwertes SA für die Vorsteuerdruck-Änderungsrate von der Bereitschaftsphase in die Vollbremsunterstützung übergeleitet. In anderen Worten, sobald der Fahrer bei einem bereits aufgebauten Vorsteuerdruck erneut das Bremspedal weiter betätigt und somit zu erkennen gibt, daß eine stärkere Bremsung erforderlich erscheint, wird eine Notbremsung ausgelöst. Wird jedoch während der Bereitschaftsphase festgestellt, daß der Fahrer den Druck auf das Bremspedal nicht weiter steigert, sondern reduziert (fallende Tendenz), so wird die Notbremsung nicht ausgelöst und die Bremsanlage verbleibt in einem Normalbrems-Zustand.

Der Aufbau des Vorsteuerdruckes erfolgt systembedingt bei schnellen Bremsbetätigungen mit einer Überschwingung, d.h. der Vorsteuerdruck nimmt zu Beginn des Bremsvorganges stärker zu als der Raddruck. Wenn nach dem Abklingen der Überschwingung und dem Angleichen an den Raddruck der Fahrer das Bremspedal weiter betätigt gibt er wie beschrieben zu erkennen, daß eine stärkere Bremsung notwendig ist.

In einer alternativen Ausführungsform findet eine Tiefpaßfilterung des Vorsteuerdruck-Signals statt. Dadurch kann beispielsweise das Überschwingen im Vorsteuerdruck-Signal zu Beginn des Bremsvorganges herausgefiltert werden. Der Übergang von der Bereitschaftsphase in die Auslösephase erfolgt in dieser Ausführungsform dann, wenn - im zeitlichen Verlauf - das ungefilterte Vorsteuerdruck-Signal das gefilterte Vorsteuerdruck-Signal trifft und der Fahrer den Vordruck weiter steigert.

In einer weiteren alternativen Ausführungsform wird nach Abklingen der Überschwingung des ungefilterten Vorsteuerdruck-Signals ein oberer Schwellwert $S_o$ vorgegeben. Der Übergang von der Bereitschaftsphase in die Auslösephase erfolgt dann, wenn dieser obere Schwellwert $S_o$ im weiteren zeitlichen Verlauf überschritten wird. Zusätzlich ist ein unterer Schwellwert $S_u$ vorgegeben. Bei Unterschreiten dieser unteren Schwelle wird die Bereitschaftsphase abgeschlossen. In einer bevorzugten Ausführungsform wird der obere Schwellwert bzw, das Druckstreuband bestehend aus oberem und unterem Schwellwert bereitgestellt, wenn beim Abklingen der Überschwingung des ungefilterten Vorsteuerdruck-Signals ein bestimmter Gradient unterschritten wird.

Gemäß einer vierten erfindungsgemäßen Ausführungsform wird in der Bereitschaftsphase der Bremsunterstützung nach einem vorbestimmten Zeitintervall die Vorsteuerdruck-Änderungsrate mit einem vierten Schwellwert SA verglichen und abhängig vom Überschreiten dieses vierten Schwellwertes SA eine Vollbremsunterstützung eingeleitet.

Bei der erfindungsgemäßen Steuerung der Bremsanlage können der erste Schwellwert S1 und/oder der dritte Schwellwert SB für die Auslösung der Bereitschaftsphase relativ sensibel, d.h. relativ niedrig angesetzt werden. Dies hat zur Folge, daß bereits bei vermeintlich unkritischen Situationen die Bremsanlage sich bereits in einer Bereitschaftsphase befindet und dafür sensibilisiert ist, im Falle eines späteren weiteren Anstiegs des Bremsdruckes in eine Notbremsung überzuleiten, ohne jedoch dem Fahrer die Möglichkeit zu nehmen, während der Bereitschaftsphase die Bremsung bzw. Verzögerung noch zu beeinflussen. Der zweite Schwellwert S2 für die sofortige Auslösung der Notbremsunterstützung kann dann erfindungsgemäß höher angesetzt werden.

Vorzugsweise wird der vierte Schwellwert SA für den Übergang aus der Bereitschaftsphase in die Auslösephase abhängig von der Drucktendenz bzw. dem Bremsverhalten mehrerer vorangegangener Rechenzyklen festgelegt. Vorzugsweise findet alle 20 ms ein Rechenzyklus statt.

Vorzugsweise erfolgt die Steigerung des Druckes an den Radbremsen dann, wenn während der Bereitschaftsphase die Notwendigkeit zur weiteren Druckerhöhung abgeleitet wird zunächst in einer Aufbauphase. "Aufbauphase" bedeutet, daß mit einer (wieder) zunehmenden Vorsteuerdruck-Änderungsrate der Raddruck an den Bremsen bis hin in den ABS-Regelbereich gesteigert wird.

Nach Rücknahme des Vordruckes um einen bestimmten Wert während der Aufbauphase wird in die Dosierphase geschaltet, in der der Raddruck proportional zur Vordruckänderung verläuft. Auf diesem Wege wird dem Fahrer während der Dosierphase eine zusätzliche hydraulische Verstärkung bereit gestellt, die er durch sein Bremsverhalten direkt beeinflussen kann.

Alternativ zur Drucksteigerung an den Radbremsen bis in den ABS-Regelbereich kann auch der Vorsteuerdruck durch die Hydraulik um einen Verstärkungsfaktor erhöht an die Radbremsen weitergegeben werden. Der Verstärkungsfaktor kann konstant oder abhängig vom Vorsteuerdruckniveau bei Auslösung variabel sein.

Die erfindungsgemäße Bremsunterstützung hat den Vorteil, daß dem Fahrer ein Übergangsbereich bereit gestellt wird, in dem er entscheiden kann, ob er eine noch weiter gehende Bremsunterstützung benötigt oder ob das erreichte Bremsniveau und die damit verbundene Verzögerung ausweicht.

Nachstehend wird die Erfindung unter Bezugnahme auf die beigefügten Zeichnungen näher erläutert.

Es zeigen:

Fig. 1      ein Flußdiagramm der erfindungsgemäßen Bremsanlagensteuerung;

Fig. 2      unterschiedliche Bremsdruckverläufe zur Veranschaulichung der erfindungsgemäßen Bremsanlagensteuerung;

Fig. 3      den zeitlichen Verlauf des Vorsteuerdruckes und des Raddruckes gemäß der ersten erfindungsgemäßen Ausführungsform;

Fig. 4.      den zeitlichen Vertauf des Vorsteuerdruckes und des Raddruckes gemäß der dritten erfindungsgemäßen Ausführungsform;

Fig. 5      den zeitlichen Verlauf des Vorsteuerdruckes, wenn keine Auslösung oder Vollbremsunterstützung erfolgt; und

Fig. 6      eine Druckfaktorkurve für die erfindungsgemäße Bremsanlagensteuerung.

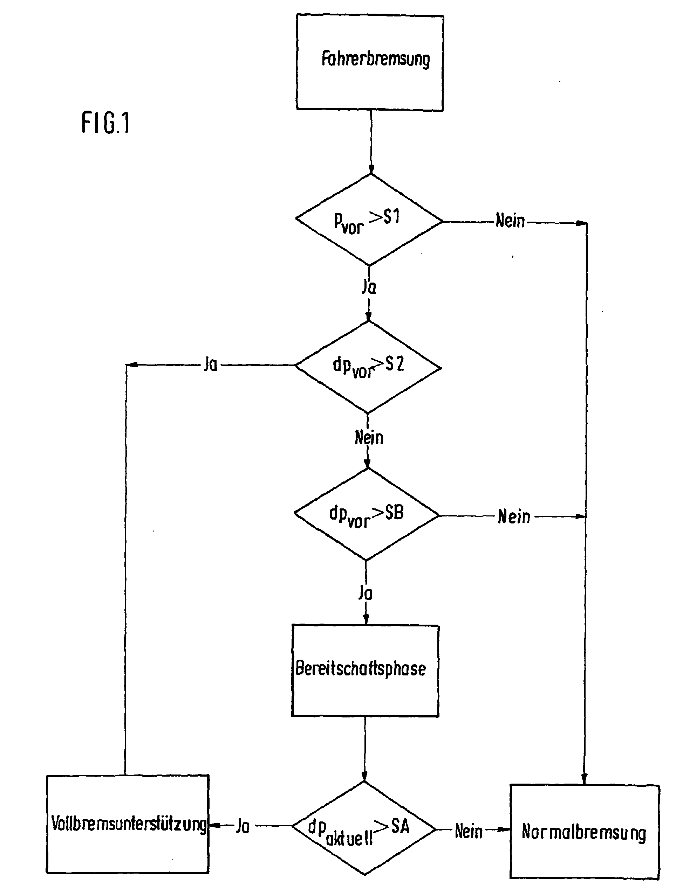

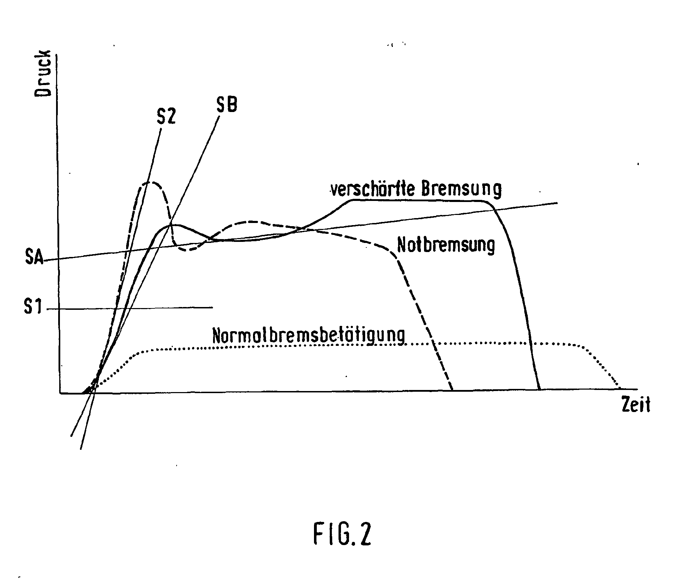

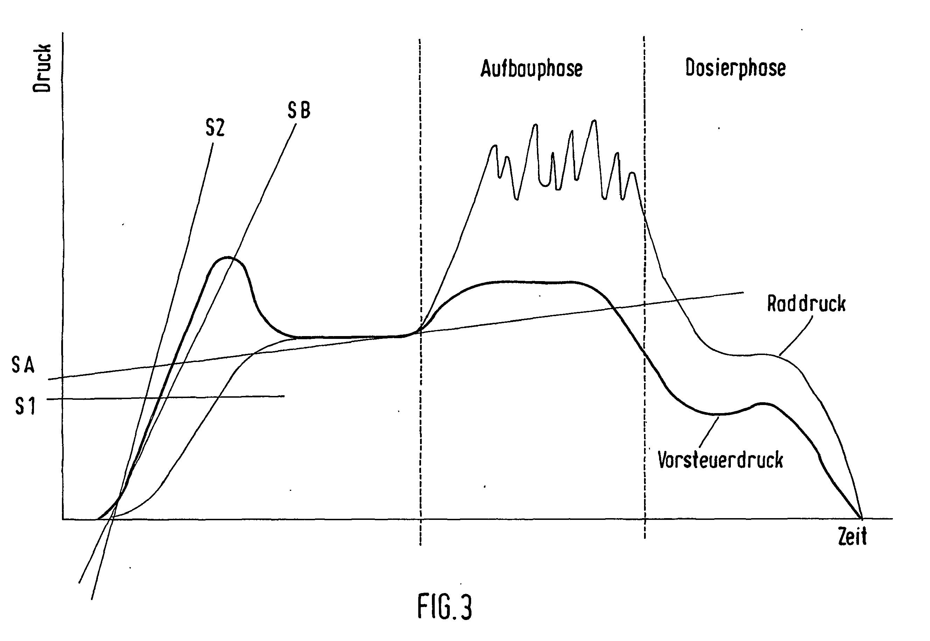

Fig. 1 veranschaulicht die erfindungsgemäße Bremsanlagensteuerung. Sobald vom Fahrer ein Bremsvorgang eingeleitet wird, findet ein Vergleich des Vorsteuerdrucks PVor mit einem ersten Schwellwert S1 statt. Wenn dieser Schwellwert S1 von dem vom Fahrer vorgegebenen Vorsteuerdruck nicht überschritten wird, erfolgt eine Normalbremsung (vgl. gepunktete Kurve in Fig. 2; rechter Zweig in Fig. 1). Andererseits findet bei Überschreiten des Schwellwertes S1 durch den Vorsteuerdruck eine weitere Abfrage statt. Diese weitere Abfrage wird von einer zweiten Vergleichseinrichtung ausgeführt, die die Vorsteuerdruck-Änderungsrate dPVor mit dem zweiten Schwellwert S2 vergleicht. Wenn die Vorsteuerdruck-Änderungsrate den Schwellwert S2 überschreitet, so erkennt die erfindungsgemäße Bremsanlagensteuerung, daß vom Fahrer eine Notbremsung durchgeführt wird, und die Vollbremsunterstützung wird aktiviert (vgl. gestrichelte Kurve in Fig. 2; linker Zweig in Fig. 1). Überschreitet die Vorsteuerdruck-Änderungsrate $dp_{Vor}$ den zweiten Schwellwert S2 nicht, so wird in einer dritten Vergleichseinrichtung überprüft, ob die Vorsteuerdruck-Änderungsrate bereits einen dritten Schwellwert SB überschreitet. Der dritte Schwellwert SB ist niedriger als der Schwellwert S2. Falls diese Bedingung ebenfalls nicht erfüllt ist, d.h. die Vorsteuerdruck-Änderungsrate so gering ist, daß selbst der dritte Schwellwert SB nicht überschritten wird, so wird eine Normalbremsung durchgeführt. Andererseits wird bei Überschreiten des dritten Schwellwertes SB die Bereitschaftsphase eingeleitet (vgl. durchgezogene Kurve in Fig. 2). Dieser Bremsverlauf zeichnet sich typischerweise dadurch aus, daß systembedingt bei schnellen Bremsbetätigungen zunächst eine Überschwingung des Vorsteuerdruckes erfolgt und sich im weiteren Verlauf Vorsteuerdruck und Raddruck angleichen. Überschreitet anschließend die Vorsteuerdruck-Änderungsrate $dp_{aktuell}$ den vierten Schwellwert SA, so wird die Vollbremsunterstützurig aktiviert und die Aufbauphase der verschärften Bremsung eingeleitet, da dieses Überschreiten des vierten Schwellwertes SA der Bremsanlagensteuerung anzeigt, daß der Fahrer das Bremspedal nun doch weiter durchtritt und stärker bremsen möchte (vgl. Fig. 3). Nimmt andererseits die Vorsteuerdruck-Änderungsrate $dp_{aktuell}$ weiter ab, (fallende Tendenz), so bleibt die Normalbremsung erhalten und die Bereitschaftsphase kann beendet werden.

Fig. 3 veranschaulicht wie beim Übergang in die Auslösephase zunächst in der Aufbauphase der verschärften Bremsung der Raddruck an den Bremsen bis hin in den ABS-Regelbereich gesteigert wird. Nimmt dann der Fahrer den Vorsteuerdruck wieder zurück, so erfolgt nach einer Rücknahme des Vorsteuerdruckes um einen bestimmten Wert der Übergang in die Dosierphase. In der Dosierphase verläuft der Raddruck proportional zur Änderung des Vorsteuerdruckes.

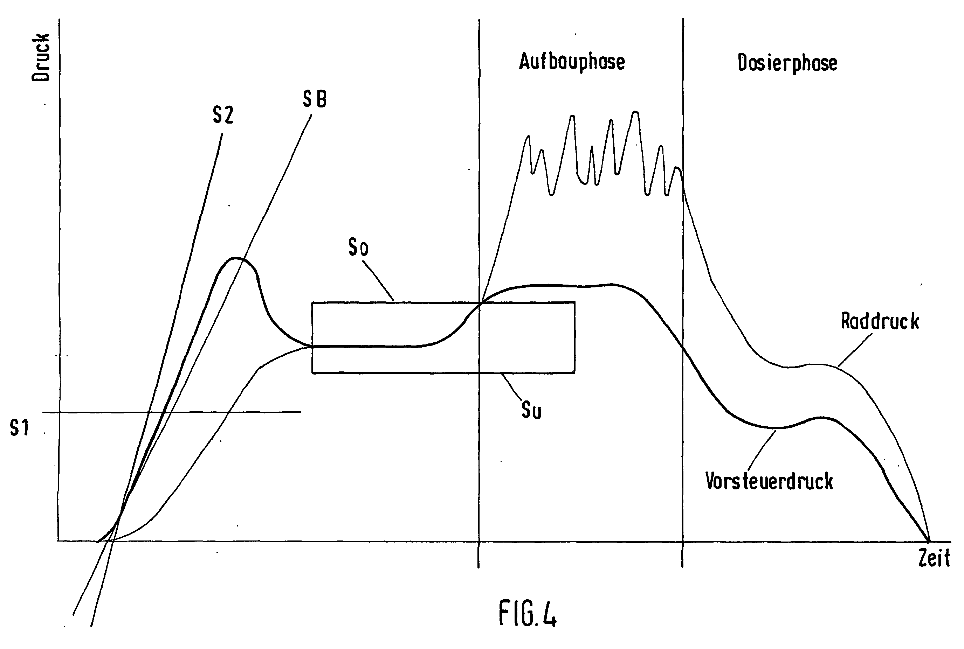

Fig. 4 veranschaulicht die dritte erfindungsgemäße Ausführungsform. In dem in Fig. 4 dargestellten Beispiel ist ein Druckstreuband mit oberem Schwellwert $S_o$ und unterem Schwellwert $S_u$ vorgegeben. Der Übergang von der Bereitschaftsphase in die Auslösephase bzw. Aufbauphase erfolgt wie in Fig. 4 gezeigt bei Überschreiten des oberen Schwellwertes $S_o$ durch den Vorsteuerdruck.

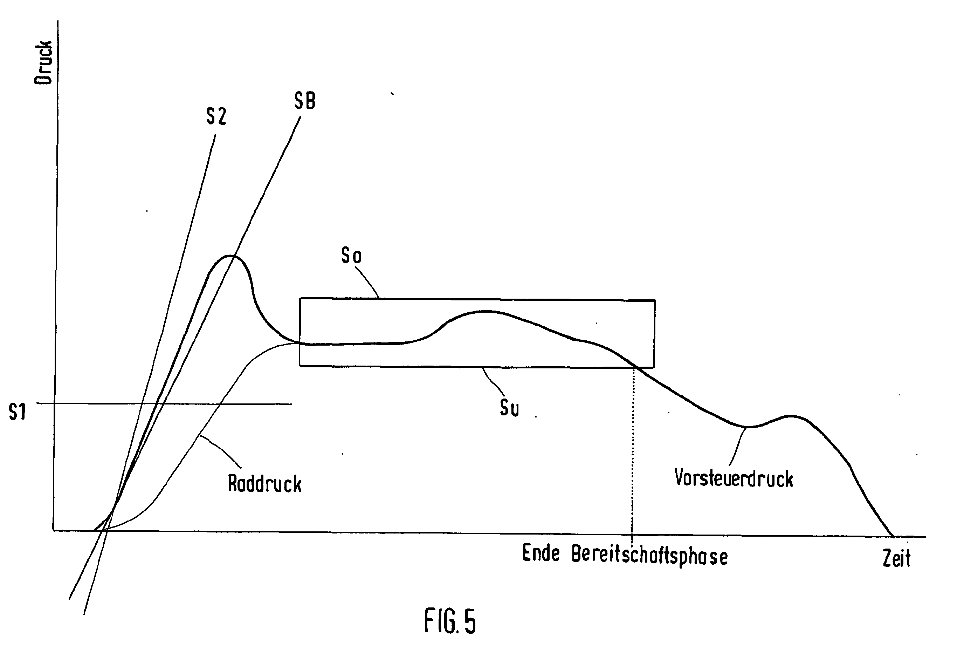

Sofern der obere Schwellwert $S_o$ während der Bereitschaftsphase nicht überschritten wird, erfolgt bei Unterschreiten des unteren Schwellwertes $S_u$ durch den Vorsteuerdruck ein Abschalten der Bereitschaftsphase. Ferner wird die Bereitschaftsphase beendet, wenn innerhalb eines vorbestimmten Zeitintervalls keine Auslösung der Vollbremsunterstützung erfolgt (vgl. Fig. 5).

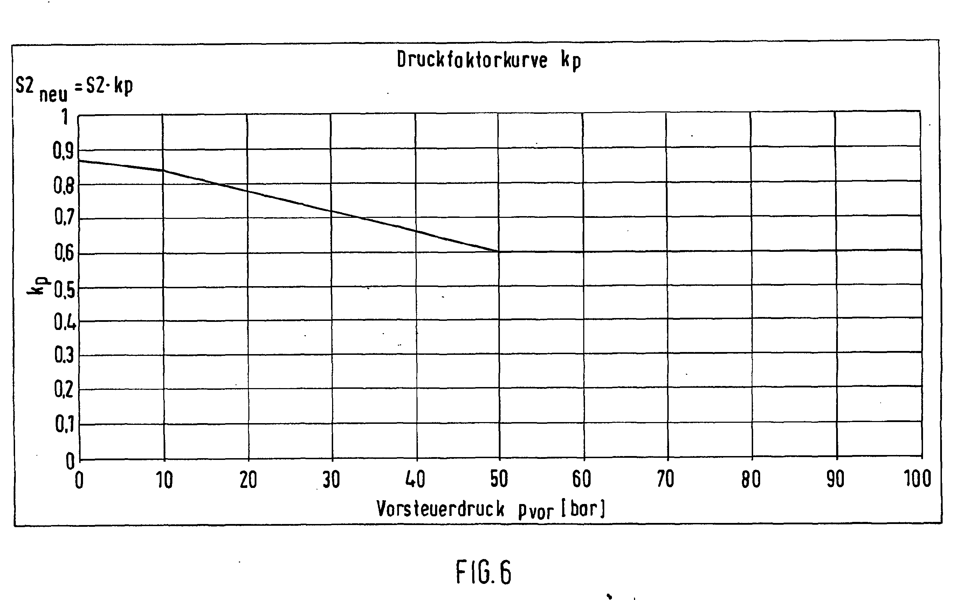

Die Schwellwerte für die Vorsteuerdruck-Änderungsrate werden beispielsweise über einen Druckfaktor kp mit dem absoluten Vorsteuerdruck korreliert. Dazu, dient beispielsweise die in Fig. 6 angegebene Druckfaktorkurve. Anhand der gezeigten Druckfaktorkurve werden beispielsweise die Schwellwerte S2 und SB wie folgt berechnet.:

$$S2_{neu} = S2_{Standard} \bullet k_p$$

$$SB_{neu} = SB_{Standard} \bullet k_p$$

Die mit dem Index "Standard" gekennzeichneten Werte sind dabei die für den unbetätigten Zustand vorgegebenen Basiswerte.

Der Schwellwert SA ist vorzugsweise fest vorgegeben. Alternativ ist SA abhängig von derjeweiligen Bremssituation (z.B.aktueller Vorsteuerdruck).

**Patentansprüche**

1. Verfahren zur Steuerung der Bremsanlage eines Fahrzeugs,

 - wobei bei Überschreiten eines ersten Schwellwertes (S1) für den Vorsteuerdruck und bei Überschreiten eines zweiten Schwellwertes (S2) für die Vorsteuerdruck-Änderungsrate eine Vollbremsunterstützung erfolgt,
 - wobei bei Unterschreiten des zweiten Schwellwertes (S2) und bei Überschreiten eines dritten Schwellwertes (SB) für die Vorsteuerdruck-Änderungsrate die Bremsunterstützung in eine Bereitschaftsphase übergeht,
 - wobei der dritte Schwellwert (SB) kleiner als der zweite Schwellwert (S2) ist,
 - wobei in der Bereitschaftsphase der Bremsunterstützung die Vorsteuerdruck-Änderungsrate nach dem Abklingen eines Überschwingens des Vorsteuerdruckes mit einem vierten Schwellwert (SA) verglichen wird, und
 - wobei von der Bereitschaftsphase in eine Vollbremsunterstützung übergeleitet wird, wenn die Vorsteuerdruck-Änderungsrate den vierten Schwellwert (SA) überschreitet, oder von der Bereitschaftsphase in eine Normalbremsung übergeleitet wird, wenn die Vorsteuerdruck-Änderungsrate den vierten Schwellwert (SA) unterschreitet.

2. Verfahren nach Anspruch 1, wobei in der Bereitschaftsphase der Bremsunterstützung nach einem vorbestimmten Zeitintervall die Vorsteuerdruck-Änderungsrate mit einem vierten Schwellwert (SA) verglichen wird und abhängig vom Überschreiten dieses vierten Schwellwertes (SA) eine Vollbremsunterstützung erfolgt.

3. Verfahren nach Anspruch 1 oder 2, wobei anstelle der Vollbremsunterstützung der Vorsteuerdruck um einen Faktor erhöht an die Radbremsen weitergegeben wird.

4. Verfahren nach Anspruch 3, wobei der Faktor konstant oder abhängig vom Vorsteuerdruckniveau variabel ist.

5. Verfahren nach einem der Ansprüche 1 bis 4, wobei das Vorsteuerdrucksignal tiefpassgefiltert wird.

6. Verfahren nach einem der Ansprüche 1 bis 5, wobei der Vergleich mit dem vierten Schwellwert (SA), nach Angleichen eines ungefilterten Vorsteuerdrucksignals an ein gefiltertes Vorsteuerdrucksignal oder an einen Raddruck beginnt.

7. Verfahren zur Steuerung der Bremsanlage eines Fahrzeugs,

 - wobei bei Überschreiten eines ersten Schwellwertes (S1) für den Vorsteuerdruck und bei Überschreiten eines zweiten Schwellwertes (S2) für die Vorsteuerdruck-Änderungsrate eine Vollbremsunterstützung erfolgt,

- wobei bei Unterschreiten des zweiten Schwellwertes (S2) und bei Überschreiten eines dritten Schwellwertes (SB) für die Vorsteuerdruck-Änderungsrate die Bremsunterstützung in eine Bereitschaftsphase übergeht,

- wobei der dritte Schwellwert (SB) kleiner als der zweite Schwellwert (S2) ist,

- und wobei nach Abklingen eines Überschwingens des Vorsteuerdruckes in der Bereitschaftsphase in eine Vollbremsunterstützung übergeleitet wird, wenn der Vorsteuerdruck einen oberen Schwellwert (So) überschreitet, oder nach Abklingen eines Überschwingens des Vorsteuerdruckes die Bereitschaftsphase beendet wird, wenn der Vorsteuerdruck einen unteren Schwellwert (Su) unterschreitet.

**8.** Verfahren nach einem der Ansprüche 1 bis 7, wobei die Schwellwerte für die Vorsteuerdruck-Änderungsrate über einen Druckfaktor (kp) vom Vorsteuerdruck abhängen.

**9.** Vorrichtung zur Steuerung der Bremsanlage eines Fahrzeugs, mit:

- einer Vorsteuerdruck-Erfassungseinrichtung;
- einer Vorsteuerdruck-Änderungsrate-Erfassungseinrichtung;
- einer ersten Vergleichseinrichtung zum Vergleichen des erfassten Vorsteuerdrucks mit einem ersten Schwellwert (S1);
- einer zweiten Vergleichseinrichtung zum Vergleichen der erfassten Vorsteuerdruck-Änderungsrate mit einem zweiten Schwellwert (S2);
- einer dritten Vergleichseinrichtung zum Vergleichen der erfassten Vorsteuerdruck-Änderungsrate mit einem dritten Schwellwert (SB);
- einer vierten Vergleichseinrichtung zum Vergleichen der erfassten Vorsteuerdruck-Änderungsrate nach dem Abklingen eines Überschwingens des Vorsteuerdruckes mit einem vierten Schwellwert (SA); und
- einer Steuereinheit, die derart ausgestaltet ist, dass:
- bei Überschreiten eines ersten Schwellwertes (S1) für den Vorsteuerdruck und bei Überschreiten eines zweiten Schwellwertes (S2) für die Vorsteuerdruck-Änderungsrate eine Vollbremsunterstiltzung erfolgt,
- bei Unterschreiten des zweiten Schwellwertes (S2) und bei Überschreiten eines dritten Schwellwertes (SB) für die Vorsteuerdruck-Änderungsrate die Bremsunterstützung in eine Bereitschaftsphase übergeht,
- der dritte Schwellwert (SB) kleiner als der zweite Schwellwert (S2) ist,
- in der Bereitschaftsphase der Bremsunterstützung die Vorsteuerdruck-Änderungsrate nach dem Abklingen eines Überschwingens des Vorsteuerdruckes mit einem vierten Schwellwert (SA) verglichen wird, und

- entweder von der Bereitschaftsphase in eine Vollbremsunterstützung übergeleitet wird, wenn die Vorsteuerdruck-Änderungsrate den vierten Schwellwert (SA) überschreitet, oder von der Bereitschaftsphase in eine Normalbremsung übergeleitet wird, wenn die Vorsteuerdruck-Änderungsrate den vierten Schwellwert (SA) unterschreitet.

**10.** Vorrichtung nach Anspruch 9, ferner mit einer fünften Vergleichseinrichtung zum Vergleichen des Vorsteuerdruckes mit einem oberen Schwellwert $(S_o)$, wobei nach Abklirigen eines Überschwingens des Vorsteuerdruckes in eine Vollbremsunterstützung übergeleitet wird, wenn der obere Schwellwert $(S_o)$ über5chritten wird.

**11.** Vorrichtung nach Anspruch 9, ferner mit einer sechsten Vergleichseinrichtung zum Vergleichen des Vorsteuerdruckes mit einem unteren Schwellwert $(S_u)$ wobei nach Abklingen eines Überschwingens des Vorsteuerdruckes die Bereitschaftsphase beendet wird, wenn der untere Schwelwert $(S_u)$ unterschritten wird.

**Claims**

**1.** A method for controlling the brake system of a vehicle,

- wherein on exceeding a first threshold value (S1) for the pilot pressure and on exceeding a second threshold value (S2) for the pilot pressure rate of change, a full braking assistance operation takes place,
- wherein when the second threshold value (S2) is fallen below and when a third threshold value (SB) is exceeded for the pilot pressure rate of change, the braking assistance operation transfers to a stand-by phase,
- wherein the third threshold value (SB) is smaller than the second threshold value (S2),
- wherein in the stand-by phase of the braking assistance operation, the pilot pressure rate of change, after an overshooting of the pilot pressure has subsided, is compared with a fourth threshold value (SA), and
- wherein a transition is made from the stand-by phase to a full braking assistance operation when the pilot pressure rate of change exceeds the fourth threshold value (SA), or a transition is made from the stand-by phase to normal braking when the pilot pressure rate of change falls below the fourth threshold value (SA).

2. A method according to claim 1, wherein in the stand-by phase of the braking assistance operation, the pilot pressure rate of change is compared with a fourth threshold value (SA) after a predetermined time interval and a full braking assistance operation takes place as a function of the exceeding of this fourth threshold value (SA).

3. A method according to claim 1 or 2, wherein, instead of the full braking assistance operation, the pilot pressure, increased by a factor, is passed to the wheel brakes.

4. A method according to claim 3, wherein the factor is constant or variable as a function of the pilot pressure level.

5. A method according to any one of claims 1 to 4, wherein the pilot pressure signal is low pass-filtered.

6. A method according to any one of claims 1 to 5, wherein the comparison with the fourth threshold value (SA) begins after adjustment of an unfiltered pilot pressure signal to a filtered pilot pressure signal or a wheel pressure.

7. A method for controlling the brake system of a vehicle,

   - wherein on exceeding a first threshold value (S1) for the pilot pressure and on exceeding a second threshold value (S2) for the pilot pressure rate of change, a full braking assistance operation takes place,
   - wherein when the second threshold value (S2) is fallen below and when a third threshold value (SB) is exceeded for the pilot pressure rate of change, the braking assistance operation transfers to a stand-by phase,
   - wherein the third threshold value (SB) is smaller than the second threshold value (S2),
   - and wherein after an overshooting of the pilot pressure has subsided in the stand-by phase, a transition is made to a full braking assistance operation when the pilot pressure exceeds an upper threshold value (So), or after an overshooting of the pilot pressure has subsided, the stand-by phase is ended if the pilot pressure falls below a lower threshold value (Su).

8. A method according to any one of claims 1 to 7, wherein the threshold values for the pilot pressure rate of change are a function of the pilot pressure via a pressure factor (kp).

9. A device for controlling the brake system of a vehicle, comprising:

   - a pilot pressure detection device;
   - a pilot pressure rate of change detection device;
   - a first comparison device to compare the detected pilot pressure with a first threshold value (S1);
   - a second comparison device to compare the detected pilot pressure rate of change with a second threshold value (S2);
   - a third comparison device to compare the detected pilot pressure rate of change with a third threshold value (SB);
   - a fourth comparison device to compare the detected pilot pressure rate of change after an overshooting of the pilot pressure has subsided with a fourth threshold value (SA); and
   - a control unit, which is configured in such a way that:
   - when a first threshold value (S1) for the pilot pressure is exceeded and when a second threshold value (S2) for the pilot pressure rate of change is exceeded, a full braking assistance operation takes place,
   - when the second threshold value (S2) is fallen below and when a third threshold value (SB) is exceeded for the pilot pressure rate of change, the braking assistance operation passes to a stand-by phase,
   - the third threshold value (SB) is smaller than the second threshold value (S2),
   - in the stand-by phase of the braking assistance operation, the pilot pressure rate of change is compared with a fourth threshold value (SA) after an overshooting of the pilot pressure has subsided, and
   - either a transition is made from the stand-by phase to a full braking assistance operation when the pilot pressure rate of change exceeds the fourth threshold value (SA), or a transition is made from the stand-by phase to normal braking when the pilot pressure rate of change falls below the fourth threshold value (SA).

10. A device according to claim 9, also with a fifth comparison device to compare the pilot pressure with an upper threshold value (So), wherein after an overshooting of the pilot pressure has subsided a transition is made to a full braking assistance operation when the upper threshold value (So) is exceeded.

11. A device according to claim 9, also with a sixth comparison device to compare the pilot pressure with a lower threshold value ($S_u$), wherein after an overshooting of the pilot pressure has subsided, the stand-by phase is ended when the lower threshold value ($S_u$) is fallen below.

## Revendications

1. Procédé de commande du système de freinage d'un véhicule selon lequel,

   - en cas de dépassement vers le haut d'un premier seuil (S1) de la pression de commande amont et en cas de dépassement vers le haut d'un second seuil (S2) pour le taux de variation de la pression de commande amont, il y a une assistance totale du freinage,
   - en cas de dépassement vers le bas du second seuil (S2) et de dépassement vers le haut d'un troisième seuil (SB) du taux de variation de la pression de commande amont, l'assistance du freinage passe en phase préparatoire,
   - le troisième seuil (SB) étant inférieur au second seuil (S2),
   - en phase préparatoire de l'assistance de freinage, après l'amortissement de la suroscillation de la pression de commande amont, le taux de variation de la pression de commande amont, est comparé à un quatrième seuil (SA), et
   - on passe de la phase préparatoire à l'assistance totale du freinage si le taux de variation de la pression de commande amont, dépasse le quatrième seuil (SA) ou est mis en freinage normal, par la phase de préparation si le taux de variation de la pression de commande amont, passe en dessous du quatrième seuil (SA).

2. Procédé selon la revendication 1,
   selon lequel
   en phase préparatoire de l'assistance de freinage, après un intervalle de temps prédéfini, on compare le taux de variation de la pression de commande amont à un quatrième seuil (SA) et en fonction du dépassement de ce quatrième seuil (SA), on réalise une assistance totale du freinage.

3. Procédé selon la revendication 1 ou 2,
   selon lequel
   à la place de l'assistance totale du freinage, on augmente la pression de commande amont d'un facteur pour la transmettre aux freins de roues.

4. Procédé selon la revendication 3,
   selon lequel
   le facteur est constant ou est variable en fonction du niveau de pression de commande amont.

5. Procédé selon l'une des revendications 1 à 4,
   selon lequel
   on traite le signal de pression de commande amont par un filtre passe-bas.

6. Procédé selon l'une des revendications 1 à 5,
   selon lequel

la comparaison avec un quatrième seuil (SA) commence après l'équilibrage d'un signal de pression de commande amont, non filtré, sur un signal de pression de commande amont, filtré, ou une pression de roue.

7. Procédé de commande du système de freinage d'un véhicule,
   selon lequel

   - en cas de dépassement vers le haut d'un premier seuil (S1) pour la pression de commande amont et de dépassement vers le haut d'un second seuil (S2) pour le taux de variation de la pression de commande amont, on assure une assistance totale au freinage,
   - en cas de dépassement vers le bas du second seuil (S2) et de dépassement vers le haut d'un troisième seuil (SB) du taux de variation de commande préalable, l'assistance au freinage passe en phase préparatoire,
   - le troisième seuil (SB) étant inférieur au second seuil (S2), et
   - après atténuation d'une suroscillation de la pression de commande amont, en phase préparatoire, on passe à l'assistance totale au freinage si la pression de commande amont dépasse un seuil supérieur ($S_o$) ou après atténuation de la suroscillation de la pression de commande amont, la phase préparatoire se termine si la pression de commande amont passe en dessous d'un seuil inférieur ($S_u$).

8. Procédé selon l'une des revendications 1 à 7,
   selon lequel
   les seuils du taux de variation de la pression de commande amont, dépendent de la pression de commande amont d'un facteur de pression (kp).

9. Dispositif de commande du système de freinage d'un véhicule comprenant :

   - une installation de saisie de la pression de commande amont,
   - une installation de saisie du taux de variation de la pression de commande amont,
   - une première installation de comparaison pour comparer la pression de commande amont, saisie, à un premier seuil (S1),
   - une seconde installation de comparaison pour comparer le taux de variation de la pression de commande amont, saisie, à un second seuil (S2),
   - une troisième installation de comparaison pour comparer le taux de variation de la pression de commande amont, saisie, à un troisième seuil (SB),
   - une quatrième installation de comparaison pour comparer le taux de variation de la pression de commande amont, saisie, après l'atténuation de la suroscillation de la pression de commande amont avec un quatrième seuil (SA), et
- une unité de commande réalisée pour que :

    * en cas de dépassement vers le haut d'un premier seuil (S1) pour la pression de commande amont et de dépassement vers le haut d'un second seuil (S2) pour le taux de variation de la pression de commande amont, on assure une assistance au freinage total,

    * en cas de dépassement vers le bas du second seuil (S2) et de dépassement vers le haut d'un troisième seuil (SB) pour le taux de variation de la pression de commande amont, l'assistance au freinage passe en phase préparatoire,

    * le troisième seuil (SB) étant inférieur au second seuil (S2),

    * en phase préparatoire de l'assistance au freinage, le taux de variation de la pression de commande amont après atténuation d'une suroscillation de la pression de commande amont, sera comparé à un quatrième seuil (SA), et

    * soit on passe de la phase préparatoire à la phase d'assistance totale au freinage si le taux de variation de la pression de commande amont, dépasse le quatrième seuil (SA) ou à partir de la phase préparatoire, on passe à un freinage normal si le taux de variation de la pression de commande préalable, passe en dessous du quatrième seuil (SA).

**10.** Dispositif selon la revendication 9, comportant en outre un cinquième comparateur pour comparer la pression de commande amont à un seuil supérieur ($S_o$) et après atténuation de la suroscillation de la pression de commande amont, on passe en assistance totale de freinage si le seuil supérieur ($S_o$) est dépassé.

**11.** Dispositif selon la revendication 9, comportant en outre une sixième installation de comparaison pour comparer la pression de commande amont à un seuil inférieur ($S_u$) et après atténuation de la suroscillation de la pression de commande amont, on termine la phase préparatoire si on passe en dessous du seuil inférieur ($S_u$).

FIG.1

Fahrerbremsung

$P_{vor} > S1$ — Nein

Ja

$dp_{vor} > S2$ — Ja

Nein

$dp_{vor} > SB$ — Nein

Ja

Bereitschaftsphase

Vollbremsunterstützung — Ja — $dp_{aktuell} > SA$ — Nein — Normalbremsung

FIG.2

FIG.3

Druck

S2
SB
SA
S1

Aufbauphase     Dosierphase

Raddruck

Vorsteuerdruck

Zeit

EP 1 341 686 B1

FIG.4

FIG.5

FIG.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19524939 A
- DE 19712859 A
- DE 19520609 A